# EUROPEAN PATENT APPLICATION

(11) **EP 1 006 037 A2**
(43) Date of publication of application: **07.06.2000**
(21) Application number: 99124162.1
(22) Date of filing: 02.12.1999
(51) Int. Cl.: B62B 13/10

(54) **Snow sledge**

(30) Priority: 04.12.1998 IT AN980053
(71) Applicant: Capogrosso, Franco, 60027 Osimo (AN) (IT)
(72) Inventor: Capogrosso, Franco, 60027 Osimo (AN) (IT)
(74) Representative: Faggioni, Carlo Maria, Dr. Ing.

(57) **Abstract**

The invention concerns a snow sledge comprising a central body (1), forming the driver's seat, a pair of skis (12) on the back side, and at least one steering ski (5) on the front side. The front ski (5) comprises steering means, apt to be controlled by the driver's feet and to cause an inclination of said ski (5) which follows the curves of the sledge. Said steering means preferably comprise a driving cross member (8), pivoted at the centre (in 10) and controlled so as to rotate by the driver's feet, and a second cross member (19), anchored to the first (8) and to the framework (20) supporting the front ski (5). The sledge can be constructed so that also the back skis (12) are apt to tilt in order to follow the curve. Finally, also two skis can be provided on the front side, instead of a single ski (5).

## Description

The present invention concerns a particularly comfortable and safe snow sledge, which the driver can steer by acting with his feet on a special control.

Since the most ancient times there are known to be sledges of different types and sizes, especially in the northern countries. The oldest and most known type of sledge comprises a frame, under which there are fixed two bands of ground metal and on top of which the sledge driver can lie down; the sledge can be braked by sticking both toe tips into the snow; whereas, by sticking a single toe tip into the snow, the sledge will steer in that direction.

Another type of sledge is that known by the name of "bob-sleigh". On the bob-sleigh the driver (or drivers) sits in a curled up position and disposes of levers which can be stuck into the snow in order to brake and/or steer.

There are also known to be sledges drawn by animals, such as dog-sledges or horse-sledges. Such sledges - which are bigger and similar to gigs - generally make use of skis, instead of metal bands, and the drivers and passengers are standing or sitting according to the type of sledge structure.

Starting from this type of sledge, it has been thought to produce sledges with three or four skis, comprising a pair of brakes and a hand-operatable steering-wheel apt to cause, by way of a rod and tie-rod system, the front ski or the pair of front skis to turn left or right. This system, however, allows only a very limited inclination of the skis to follow the curve, whereby it proves to be handy and safe only at very low speeds.

A considerable improvement and progress in respect of the aforecited previous technique is achieved by the present invention, which concerns a snow sledge comprising a central body forming the driver's seat, a pair of skis on the back side and at least one steering ski on the front side, characterized in that the front ski comprises steering means apt to be controlled by the driver's feet, which cause an even strong inclination of said ski apt to follow the curves of the sledge.

Preferably, said steering means comprise a driving cross member, controlled by the driver's feet so as to rotate in respect of the central body, and anchored to another cross member onto which there are fixed pivoting means to support the ski and articulated means to cause the inclination thereof.

The present invention will now be described in further detail, with reference to some preferred embodiments thereof, illustrated on the accompanying drawings, in which:
Fig. 1 is a perspective view, from the top, of a sledge according to the present invention;
Fig. 2 is a perspective view, from the bottom, of a preferred embodiment of the sledge according to the present invention, following a rectilinear path;
Fig. 3 is a view similar to that of fig. 2, following a curved path to the left;
Fig. 4 is a view from the bottom, showing an enlarged detail of the steering means of the preferred embodiment of the sledge according to the invention, following a rectilinear path;
Fig. 5 is a view similar to that of fig. 4, following a curved path to the right;
Fig. 6 is a view similar to that of fig. 4, following a curved path to the left; and
Fig. 7 is a view from the bottom, showing an enlarged detail of the steering means of an alternative embodiment of the sledge according to the invention, following a rectilinear path.

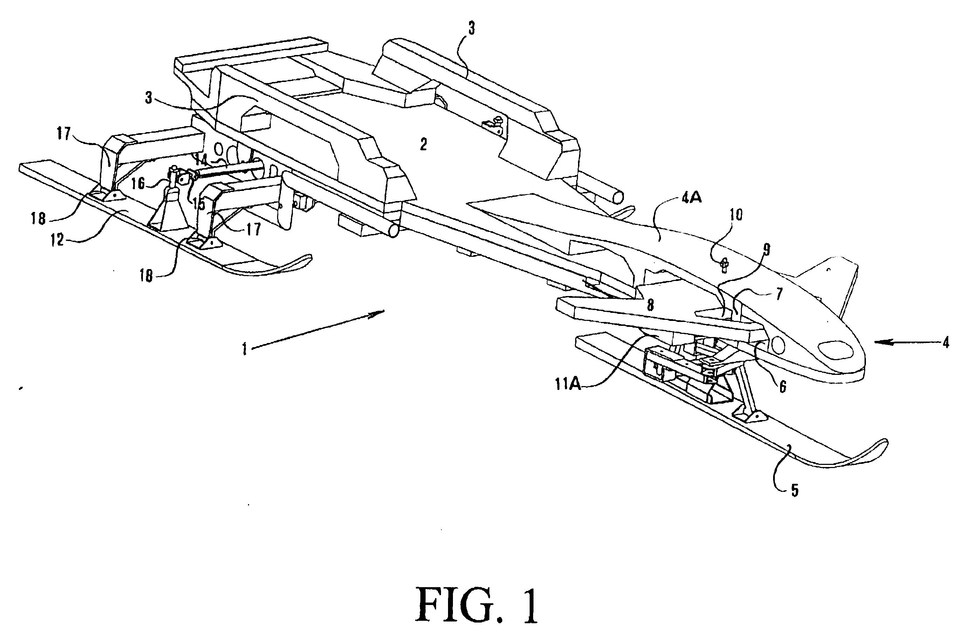

As shown in figs. 1 to 3, the snow sledge according to the present invention comprises a wide and stout central body 1 consisting of a platform 2, bound laterally by two sideboards 3 and shaped at the back so as to form a seat for the user. To the front portion 4 of the central body 1 - notably boat-tailed and reinforced by a jib 4A formed as a bridge - there is associated, underneath, a steering ski 5 apt to tilt in order to follow the curve of the sledge. A driving cross member 8 is positioned into the front portion 4 of the body 1, housed into the opening 6 formed between the jib 4A and said body, the jib 4A comprising a wall 7 apt to stiffen said jib and crossing a trapezoidal opening 9 of the cross member 8. This latter is apt to rotate thanks to a pivot 10 positioned across its centre. Two double-wedge-shaped guide blocks 11A and 11B are fixed onto the bottom part of the driving cross member 8 and engage onto the sides of the front portion 4 of the body 1; they act as end-of-stroke blocks to stop the rotation of the driving cross member 8, and thus the steering action. With his feet the user can control the rotation of the cross member 8, in order to cause the inclination of the ski 5 and thereby follow a curve, as described hereinafter.

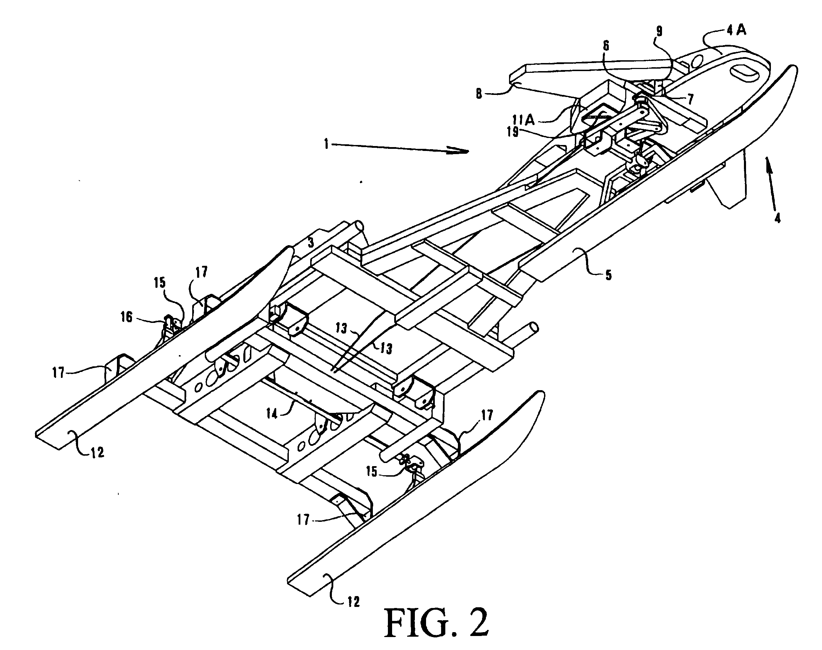

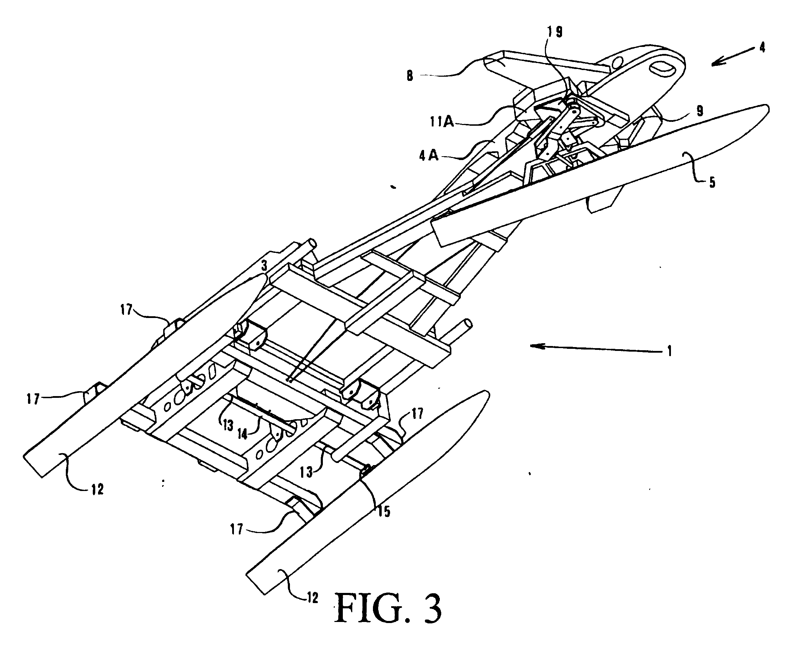

On its back side the central body 1 is provided with a pair of non-steering skis 12. According to a preferred and particularly advantageous embodiment, the non-steering skis 12 are also apt to tilt during the curve. For this purpose, two control cables 13 (figs. 2 and 3) extend from the driving cross member 8 of the front ski 5 and, after stretching along a common longitudinal path, each of said cables 13 is deviated sideways (fig. 3) to control the transversal sliding of a coupling bar 14 which connects the two skis 12, said coupling bar being connected to said skis by way of articulated joints 15, acting on columns 16 mounted on the skis 12. The skis 12 are moreover connected to the body 1 of the sledge by means of support brackets 17 provided with joints 18 pivoted into the skis 12.

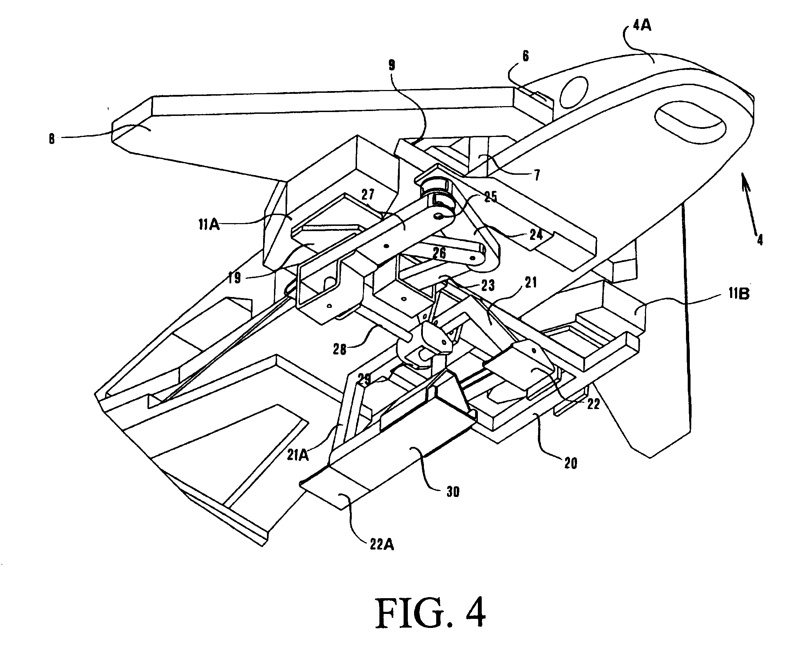

Figs. 4, 5 and 6 illustrate, on an enlarged scale and according to said preferred embodiment of the invention, the construction of the steering means, into the front portion 4 of the central body 1, to cause the inclination of the front ski 5. As already seen, the driving cross member 8 is provided with two end-of-stroke guide blocks 11A, 11B, to stop the steering action, which engage onto the opposite sides of the central body 1. A second cross member 19 connects these two blocks underneath and carries, fixed thereto, a framework 20 with two arms 21, 21A, onto the ends of which there are pivoted the supports 22, 22A, for the front ski 5 (not shown in figs. 4, 5 and 6 for the sake of clearness).

A lever 23 is pivoted, at one end, onto the cross member 19 and carries, at the other end, another lever 24. Said lever 24 actually forms one side of a triangle and is pivoted, at one end, onto said lever 23, while its other end is pivoted onto a fulcrum 25 of the body 1. The other two sides of the triangle consist of a lever 27, an end of which is also pivoted on said fulcrum 25, and of an arm 26 which stiffly connects the other two sides of the triangle, namely the lever 24 and the lever 27. At its end opposite to the fulcrum 25, said lever 27 carries, by way of an articulated joint, a transversal shaft 28. At the other end of the shaft 28, an articulated joint 29 carries a bracket 30 to be mounted at the centre of the front ski 5.

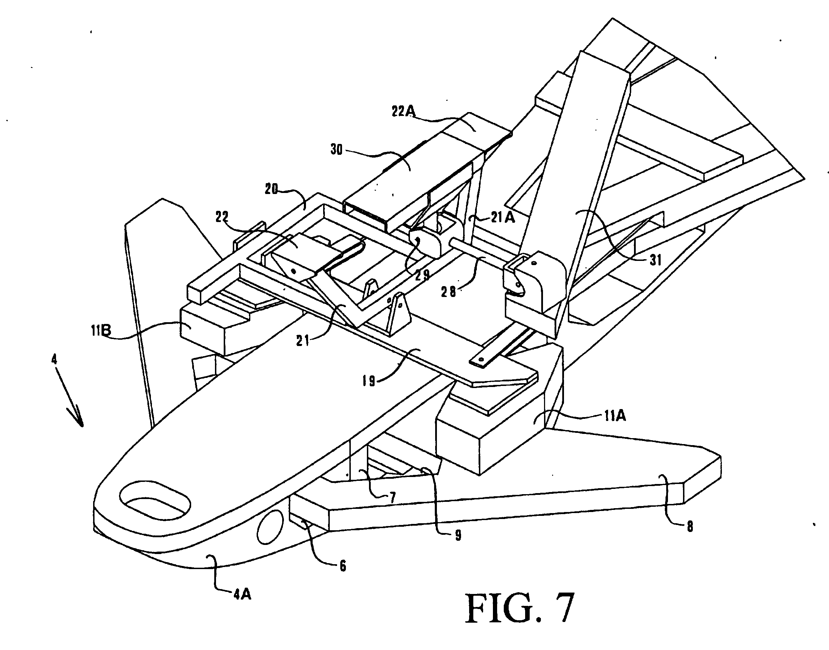

Fig. 7 illustrates, on an enlarged scale and according to an alternative embodiment of the present invention, the boat-tailed front portion 4 of the central body 1. The same reference numbers correspond to the same elements. As can be easily seen, in this case the transversal shaft 28, instead of being carried by the leverage of the previously described embodiment; is supported by a bar 31 fixed onto the central body 1.

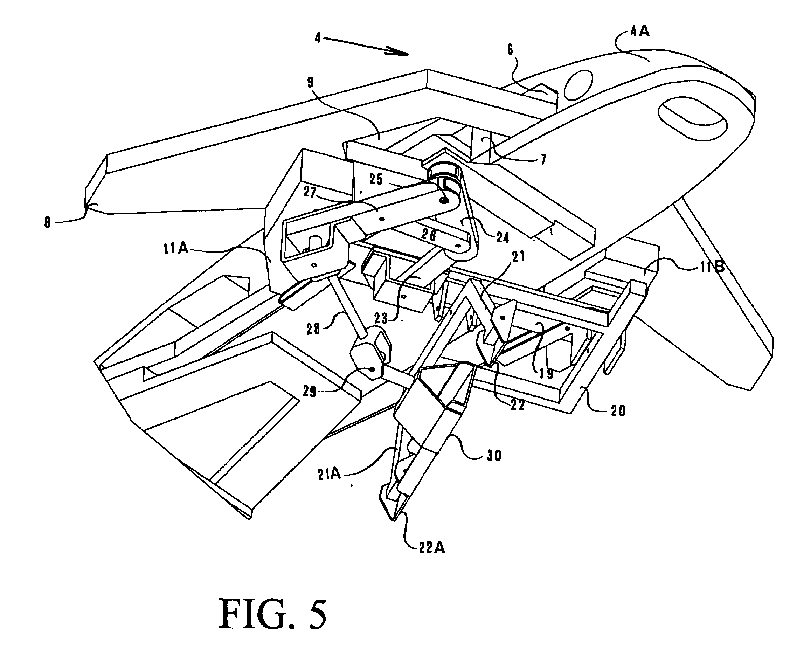

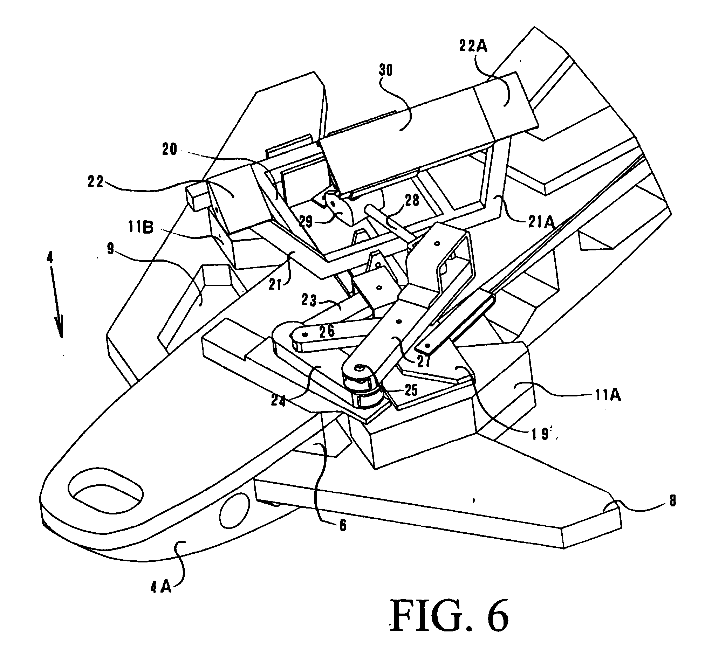

When using the sledge according to the present invention, the driver takes a seat on the platform 2 of the central body 1 and, leaning each foot against one of the two branches of the driving cross member 8, he launches the sledge downhill. When he needs to follow a curve, he must simply push forward the foot external to the curve, thereby causing the rotation of the driving cross member 8 about its pivot 10, up to moving it - for example - into the position shown in figs. 3, 5 and 6. This rotating movement of the cross member 8 is accompanied by a corresponding movement of the cross member 19 and respective framework 20, and is limited by the geometrical double-wedge shape of the blocks 11A and 11B. The motion of the cross member 19 involves the simultaneous rotation of the framework 20 (see fig. 4) and, consequently, that of its arms 21, 21A, with the supports 22, 22A: the front ski 5 thereby steers in the wanted direction, for example to the right (fig. 5), or to the left (fig. 6).

According to the invention, besides causing the ski 5 to steer, one also obtains an inclination of said ski so as to follow the curve in the most suitable conditions.

According to the preferred embodiment of the invention, illustrated in figs. 4, 5 and 6, this is obtained through the previously described complex leverage system forming a triangle. Fig. 4 shows said steering system in a position to follow a rectilinear path, such as described heretofore.

In Fig. 5 - which illustrates said steering system in a position to follow a curved path to the right - the rotation of the driving cross member 8 about the pivot 10, under the pressure of the driver's foot external to the curve, continues until the end-of-stroke guide block 11A engages onto the side of the central body 1. The movement of the cross member 19 moves backward the lever 23 which draws therewith the lever 24; this latter, thanks to the triangle system with the stiff connection provided by the arm 26, pushes outwardly the lever 27. This allows to finally shift the shaft 28, with the articulated joint 29, inwardly of the curve. Since the front ski 5 is pivoted with its supports 22, 22A, onto the arms 21, 21A, of the framework 20, the drawing action of the articulated joint 29 does not produce the effect to move the bracket 30, and thus the ski 5, outwardly towards the lever 27, but produces their inclination such as illustrated in fig. 5.

In fig. 6 - which illustrates said steering system in a position to follow a curved path to the left - the steering of the ski 5 is obtained by rotation of the framework 20, exactly as in the previous case, but in the opposite direction. In this case, the rotation of the cross member 19 moves forward the lever 23 and, consequently, the lever 24. This latter, thanks to the triangle system with the stiff connection provided by the arm 26, pushes the lever 27 towards the inside of the central body 1, thereby shifting the shaft 28, with the articulated joint 29, inwardly of the curve. Also in this case, the structure of the supports 22, 22A, and of the bracket 30 prevent the front ski 5 from being moved in a direction opposite to the triangle system, obtaining instead the desired inclination thereof.

In the simpler alternative embodiment illustrated in fig. 7, the shaft 28 is fixed, in an articulated manner, onto the bar 31. The steering is obtained in a way similar to that previously described, by pressing one's feet onto the driving cross member 8. This causes, as already seen, the simultaneous rotation of the cross member 19 and of the ski 5. The curve followed by the ski 5 causes the bracket 30 to move away from the articulated joint 29, or to draw close thereto, thereby obtaining the wanted inclination of said ski 5.

As already indicated with reference to a particularly advantageous embodiment illustrated in figs. 2 and 3, the sledge according to the present invention is prearranged so that also the back skis 12 are apt to tilt during steering thereof, so as to follow the curve in the most suitable conditions. In fact, when the driving cross member 8 is pressed with the outer foot, one draws the control cable 13 external to the curve. A pulling action is thus transmitted to the coupling bar 14, drawing it inwardly of the curve. Thanks to the presence of the articulated joints 15, acting on the columns 16, the skis 12 tilt inwardly of the curve. The pivoted joints 18 allow the respective ski 12 to freely rotate, without creating any obstacles. At the same time, the movement of the coupling bar 14 pushes the cable 13, drawing it along, so that the two cables are always under tension and do not risk to get entangled. Needless to say that, in this way, the roadholding of the sledge - even in the case of curves on steep slopes, taken at high speed - is notably improved.

As can be easily understood from the above description, the present invention allows to obtain a very comfortable sledge, whereon it may be possible to travel in a practically sitting position. The sledge according to the present invention is moreover extremely safe and reliable, due to the combined inclination of the front ski during the curve with the steering means controlled by the driver's feet, and not by a manually operated hand-wheel.

It is evident that different modifications and variants can be introduced, all within reach of a technician skilled in the art, without thereby departing from the scope of the present invention. In particular, the description refers to sledges wherein only one front ski is provided. In actual fact, according to the invention, even a pair of skis can be provided on the front side, without substantially changing the working mechanism of the sledge.

## Claims

1. Snow sledge comprising a central body (1) forming the driver's seat, a pair of skis (12) on the back side and at least one steering ski (5) on the front side, characterized in that the front ski (5) comprises steering means apt to be controlled by the driver's feet, which cause an even strong inclination of said ski (5) apt to follow the curves of the sledge.

2. Snow sledge as in claim 1), wherein said front ski (5) is supported by a framework (20) fixed to the steering means, and is anchored on two supports (22, 22A) pivoted onto the ends of two arms (21, 21A) of said framework (20).

3. Snow sledge as in claims 1) and 2), wherein said steering means comprise a driving cross member (8), controlled by the driver's feet so as to rotate about a pivot (10), said rotation being stopped by end-of-stroke guide blocks (11A, 11B) engaging onto the opposite sides of the central body (1), said driving cross member (8) being anchored to a second cross member (19) onto which there are fixed the support means (20; 21, 21A; 22, 22A) for the front ski (5).

4. Snow sledge as in claim 3), wherein the inclination of said front ski (5) is obtained through a leverage system forming a triangle and comprising: a first lever (23), pivoted on the second cross member (19); a second lever (24), pivoted on said first lever (23) and carrying, fixed thereto, a stiff connection arm (26) the other end of which is fixed onto a third lever (27); said lever (27) being pivoted, at one end (25), onto the second lever (24) and onto the central body (1) of the sledge, and carrying at its other end, by way of an articulated joint, a shaft (28) the other end of which is in turn provided with an articulated joint (29) carrying a bracket (30) mounted at the centre of the front ski (5).

5. Snow sledge as in claim 3), wherein the inclination of said front ski (5) is obtained through a system comprising: a shaft (28), an end of which is fixed, in an articulated manner, onto the central body (1) of the sledge, and the other end of which is connected, through an articulated joint (29), to a bracket (30) mounted on the front ski (5), eccentric in respect thereof.

6. Snow sledge according to any one of the previous claims, wherein said back skis (12) are mounted on the sledge, through pivoting joints (18), at the end of pairs of support brackets (17) fixed to the body (1) of the sledge, and are reciprocally connected by a coupling bar (14) through articulated joints (15), and wherein a pair of control cables (13) extends from the driving cross member (8) of the steering means, each cable stretching in one steering direction and being apt to control the transversal sliding of said coupling bar (14) which, acting on said joints (15) and on columns (16) connected thereto, causes the inclination of said skis (12) when following a curve.

7. Snow sledge according to any one of the previous claims, wherein, on the front side, instead of said at least one steering ski (5), a pair of steering and inclinable skis can be provided.
